# EUROPEAN PATENT SPECIFICATION

(11) **EP 0 621 100 B1**
(45) Date of publication and mention of the grant of the patent: **12.03.1997**
(21) Application number: 93923049.6
(22) Date of filing: 22.10.1993
(51) Int. Cl.: B23H 7/02

(54) **WATER-TIGHT STRUCTURE FOR IMMERSION WIRE ELECTRIC DISCHARGE MACHINES**
DICHTUNG FUER DEN BEHAELTER EINER DRAHTSCHNEIDEFUENKENEROSIONSMACHINE
STRUCTURE ETANCHE A L'EAU POUR MACHINES D'ETINCELAGE PAR FIL A IMMERSION

(30) Priority: 26.10.1992 JP 309773/92
(43) Date of publication of application: 26.10.1994
(73) Proprietor: FANUC LTD., Minamitsuru-gun, Yamanashi 401-05 (JP)
(72) Inventor: KITA, Yuki, Room 10-203, Fanuc Manshion Harimomi, Minamitsuru-gun, Yamanashi 401-05 (JP); YODA, Shinji, Fanuc Dai-3 Vira-karamatsu, Minamitsuru-gun, Yamanashi 401-05 (JP); TAKAYAMA, Yushi, Fanuc Dai-3 Vira-karamatsu, Minamitsuru-gun, Yamanashi 401-05 (JP)
(74) Representative: Billington, Lawrence Emlyn
(86) International application number: JP9301530
(87) International publication number: WO9409938

(56) References cited:
- EP-A- 0 304 882
- JP-A- 1 306 130
- JP-A-62 282 827

## Description

The present invention relates to an immersion type wire cut electric discharge machine for performing electric discharge machining on a workpiece immersed in a working fluid, and more particularly to a watertight structure between a lower arm and a working fluid tank of an immersion type wire cut electric discharge machine.

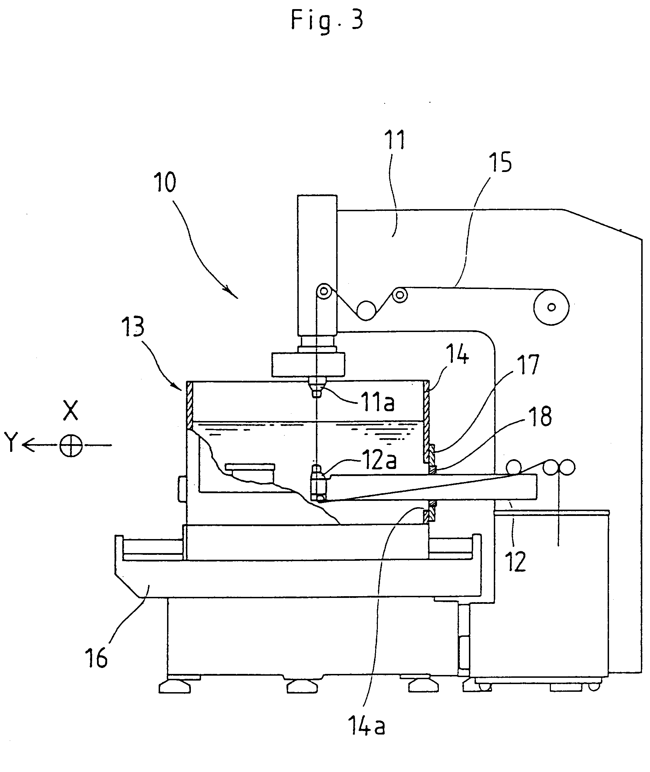

FIG. 3 shows the construction of a conventional immersion type wire cut electric discharge machine 10. An upper arm 11 is installed above a working fluid tank 13 for storing a working fluid, and a lower arm 12 projects into the working fluid tank 13 in an opposed relation to the upper arm 11. A wire electrode 15 is stretched between a lower nozzle guide 12a mounted at the tip end of the lower arm 12 and an upper nozzle guide 11a mounted at the tip end of the upper arm 11. Electric discharge is induced between the wire electrode 15 and a workpiece (not shown) placed in the working fluid tank 13. The working fluid tank 13 is mounted on a table 16 which is moved in an X-Y coordinate plane in accordance with a working program, and moves in the X-axis direction, which is perpendicular to the paper surface of FIG. 3, and in the Y-axis direction, which is parallel to the paper surface, with respect to the lower arm 12. Therefore, a watertight structure for permitting the movement in the X- and Y-axis directions must be installed between the lower arm 12 and a wall 14 of the working fluid tank 13 which the lower arm 12 penetrates.

An elongated hole 14a extending in the X-axis direction is formed in the wall 14 of the working fluid tank 13, and the lower arm 12 extends through this elongated hole 14a. The watertight structure for the movement in the X-axis direction is usually constituted by a slide plate 17 which shields the elongated hole 14a and moves freely in the X-axis direction. The conventional watertight structure for permitting the movement in the Y-axis direction consists of a bushing 18 which is annularly formed of leather or rubber and arranged between the slide plate 17 and the lower arm 12. Alternatively, the conventional watertight structure consists of a bellows one end of which is fixed to the lower arm 12 and the other end to the slide plate 17 to be freely expanded and contracted in the Y-axis direction.

However, in order to ensure high watertightness by using leather or rubber in the watertight structure for permitting the movement in the Y-axis direction, the contact area between the bushing and the outer peripheral surface of the lower arm 2 must be increased, and also the contact pressure must be increased, thereby causing the problem of an increase in the sliding resistance between the working fluid tank 13 and the arm 12. The use of a bellows involves the possibility of breaking and a problem of relatively high cost.

Other examples of watertight structures for an immersion type wire cut electric discharge machine according to the precharacterising part of the attached claim 1, are disclosed in EP-A-0304882 and JP-A-1-306130.

According to the present invention there is provided a watertight structure for an immersion type wire cut electric discharge machine which performs electric discharge machining between a wire electrode stretched between an upper arm and a lower arm, and a workpiece immersed in a working fluid, comprising: a working fluid tank disposed movably in one plane with respect to said lower arm, for storing the working fluid, said lower arm extending through a wall of said working fluid tank; a first watertight mechanism provided on the wall of said working fluid tank through which said lower arm extends, for permitting the movement of said lower arm in a direction perpendicular to the extending direction of said lower arm, said first watertight mechanism including a slide member through which said lower arm extends and which is movable in the direction perpendicular to the extending direction of said lower arm; and a second watertight mechanism provided between said lower arm and said slide member of said first watertight mechanism, for permitting the movement of said lower arm in the extending direction of said lower arm, characterised by said second watertight mechanism including an oil seal being fixed to said slide member and in contact with the outer peripheral surface of said lower arm to provide sealing between said slide member and the outer peripheral surface of said lower arm, and there being a clearance retaining mechanism provided at a portion where said lower arm penetrates said slide member, to always keep a constant clearance between the outer peripheral surface of said lower arm and said slide member.

An embodiment of the present invention may provide a watertight structure for an immersion type wire cut electric discharge machine, which has a simple construction, a high watertight effect, and a low sliding resistance.

The clearance retaining mechanism, preferably comprising a spacer provided at the slide member and having a tip end which abuts on the lower arm, can prevent deformation of the oil seal, by which high watertightness is ensured.

### BRIEF DESCRIPTION OF THE DRAWINGS

FIG. 1 is a partially cutaway front view of an immersion type wire cut electric discharge machine in accordance with one embodiment of the present invention;
FIG. 2 is a horizontal sectional view of a principal part of the electric discharge machine shown in FIG. 1; and
FIG. 3 is a partially cutaway front view of a conventional immersion type wire cut electric discharge machine.

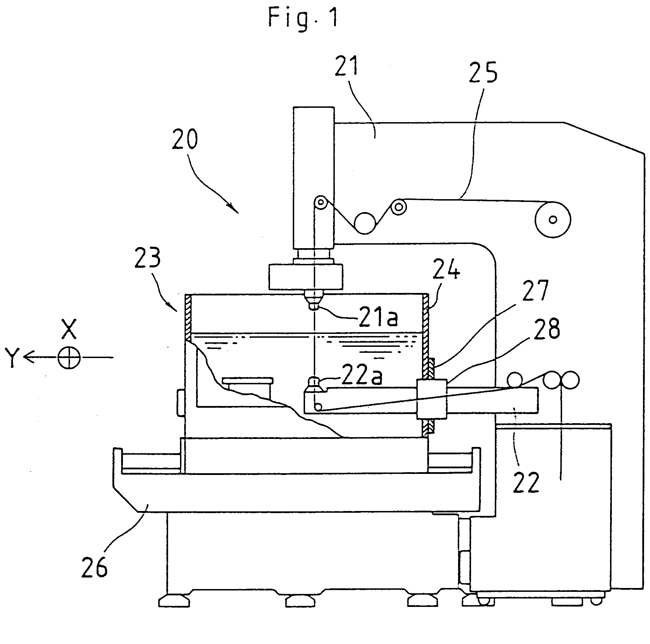

As shown in FIG. 1, the immersion type wire cut electric discharge machine 20 in accordance with the present invention is provided with an upper arm 21 installed above a working fluid tank 23 for storing a working fluid and a lower arm 22 protruding into the working fluid tank 23 in an opposed relation to the upper arm 21. A wire electrode 25 is stretched between a lower nozzle guide 22a mounted at the tip end of the lower arm 22 and an upper nozzle guide 22a mounted on the tip end of the upper arm 21. The working fluid tank 23 is mounted on a table 26 which is moved in an X-Y coordinate plane in accordance with a working program, and moves in the X-axis direction, which is perpendicular to the paper surface of Fig. 1, and in the Y-axis direction, which is parallel to the paper surface, with respect to the lower arm 22.

An elongated hole 24a extending in the X-axis direction is formed in a wall 24 of the working fluid tank 23. The elongated hole 24a is shielded by a slide plate 27. The slide plate 27 is provided to be movable in the X-axis direction, constituting a watertight structure for permitting the movement in the X-axis direction. The slide plate 27 is provided with a cylindrical mounting tube 28, and the lower arm 22 extends through the mounting tube 28.

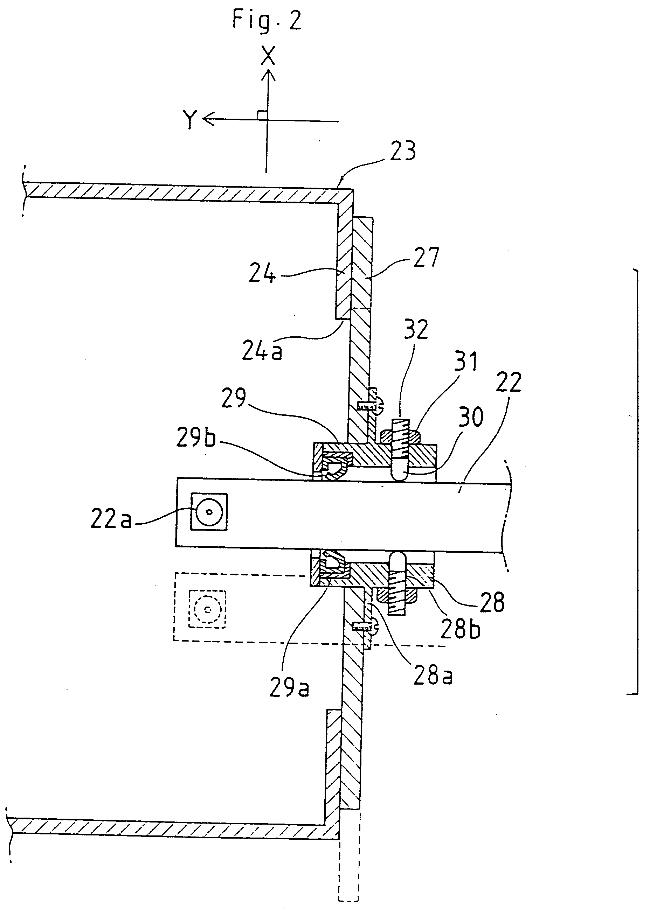

FIG. 2 is an enlarged horizontal sectional view showing the portion where the lower arm 22 of the immersion type wire cut electric discharge machine 20 shown in FIG. 1 penetrates the working fluid tank 23. The lower arm 22 has a circular cross section that is perpendicular to its axis, and extends through the elongated hole 24a formed in the side wall 24. The tip end of the lower arm 22 is located in the working fluid tank 23, and is provided with a lower nozzle guide 22a.

The elongated hole 24a of the side wall 24 is shielded by the slide plate 27, which is supported slidably in the X-axis direction along the outside surface of the side wall 24 of the working fluid tank 23.

At the portion where the lower arm 22 penetrates the slide plate 27, the mounting tube 28 is fixed to the slide plate 27 by means of a flange 28a. The lower arm 22 extends coaxially through the mounting tube 28. The mounting tube 28 is provided with an oil seal 29 and a spacer 30.

The oil seal 29 has a metal ring 29a and a lip 29b consisting of an elastic material arranged along the inner periphery of the metal ring 29a. The inner periphery of the lip 29b is in contact with the outer periphery of the lower arm 22, so that the movement of the lower arm 22 in the Y-axis direction is permitted, and the watertightness between the mounting tube 28 and the lower arm 22 is ensured. The oil seal 29 may be of the construction specified by JIS (Japanese Industrial Standard) B2402. Also, the oil seal 29 may be, for example, of a spring-loaded construction other than the construction shown in FIG. 2. Such an oil seal provides a high watertight effect compared with the conventional bushing made of leather or rubber.

The spacer 30 is formed of a rod which is made of a material having a low sliding resistance such as Teflon (trade name), and is inserted into two installation holes 28b formed opposite to each other in the mounting tube 28. Nuts 31 are fixed to the outer peripheral surface of the mounting tube 28. A screw 32 is screwed into the nut 31 so that the tip end of the spacer 30 is positioned to come into contact with the outer peripheral surface of the lower arm 22.

The two spacer installation holes 28b are arranged opposite to each other on the diameter parallel to the sliding direction of the slide plate 27 (X-axis direction). The spacers 30 mounted in the spacer installation holes 28b abut on the outer peripheral surface of the lower arm 22 and hold the lower arm 22 between them to restrain the relative movement between the lower arm 22 and the mounting tube 28. Thus, the clearance between the inner peripheral surface of the mounting tube 28 and the outer peripheral surface of the lower arm 22 is kept constant at all times. This constant clearance is set so that the contact pressure between the lip 29b of the oil seal 29 and the outer peripheral surface of the lower arm 22 is kept at a proper value.

After the working fluid tank 23 is filled with a working fluid, and the wire cut electric discharge machine 20 starts to be operated, the working fluid tank 23 is moved in the X-Y directions with respect to the lower arm 22 in accordance with a working program to perform predetermined electric discharge machining on a workpiece. When the working fluid tank 23 moves in the X-axis direction, the lower arm 22 moves relatively together with the slide plate 27 as indicated by the broken line in FIG. 2, so that the slide plate 27 shields the elongated hole 24a in the wall 24 of the working fluid tank 23, thereby preventing water leakage. When the working fluid tank 23 moves in the Y-axis direction, the lower arm 22 moves relatively with respect to the slide plate 27, and the oil seal 29 prevents water leakage.

When the slide plate 27 moves in the X-axis direction with respect to the working fluid tank 23, the frictional force which the slide plate 27 is subjected to acts on the lower arm 22 via the spacers 30, so that the lip 29b of the oil seal 29 is prevented from being collapsed and deformed by this frictional force, thereby preventing water leakage due to deformation. When the lower arm 22 moves relatively in the Y-axis direction with respect to the slide plate 27, the force which the lower arm 22 is subjected to is only the frictional force due to the contact with the lip 29b of the oil seal 29 and the contact with the spacers 30. Therefore, the force is very small to allow the lower arm 22 to move smoothly. It is preferable to form the tip end of the spacer 30 into a semispherical shape as shown in the figure so that the area of contact with the outer peripheral surface of the lower arm 22 is decreased as much as possible.

The present invention is not limited to the specific construction shown in the figures, and various modifications can be made. The spacer 30 should be installed when the sliding resistance of the slide plate 27 is relatively high. For the spacer 30, any material having lubricity and wear resistance may be used. The slide plate 27 for shielding the elongated hole 24a is sometimes composed by combining a plurality of plates. In order to shield the elongated hole 24a and permit the movement of the lower arm 22 in the Y-axis direction, a bellows which expands and contracts in the Y-axis direction, can be used.

## Claims

1. A watertight structure for an immersion type wire cut electric discharge machine which performs electric discharge machining between a wire electrode (25) stretched between an upper arm (21) and a lower arm (22), and a workpiece immersed in a working fluid, comprising:
a working fluid tank (23) disposed movably in one plane with respect to said lower arm (22), for storing the working fluid, said lower arm (22) extending through a wall (24) of said working fluid tank (23);
a first watertight mechanism provided on the wall (24) of said working fluid tank (23) through which said lower arm (22) extends, for permitting the movement of said lower arm (22) in a direction perpendicular to the extending direction of said lower arm (22), said first watertight mechanism including a slide member (27) through which said lower arm (22) extends and which is movable in the direction perpendicular to the extending direction of said lower arm (22); and
a second watertight mechanism provided between said lower arm (22) and said slide member (27) of said first watertight mechanism, for permitting the movement of said lower arm (22) in the extending direction of said lower arm (22), characterised by:
said second watertight mechanism including an oil seal (29) being fixed to said slide member (27) and in contact with the outer peripheral surface of said lower arm (22) to provide sealing between said slide member (27) and the outer peripheral surface of said lower arm (22), and there being a clearance retaining mechanism (30-32) provided at a portion where said lower arm (22) penetrates said slide member (27), to always keep a constant clearance between the outer peripheral surface of said lower arm (22) and said slide member (27).

2. A watertight structure for an immersion type wire cut electric discharge machine according to claim 1, wherein said lower arm (22) has a circular cross section.

3. A watertight structure for an immersion type wire cut electric discharge machine according to claim 1 or 2, wherein said slide member (27) has a mounting member (28) through which said lower arm (22) extends, and said oil seal (28) is installed to said slide member (27) via said mounting member (28).

4. A watertight structure for an immersion type wire cut electric discharge machine according to any preceding claim, wherein said oil seal (29) comprises a metal ring (29a), and an elastic lip (29b) arranged along the inner periphery of said metal ring (29a).

5. A watertight structure for an immersion type wire cut electric discharge machine according to any preceding claim, wherein said clearance retaining mechanism (30-32) comprises a spacer (30) provided at said slide member (27) and having a tip end which abuts on said lower arm (22).

6. A watertight structure for an immersion type wire cut electric discharge machine according to claim 5, wherein said slide member (27) has a mounting member (28) through which said lower arm (22) extends, and a pair of said spacers (30) are installed opposite to each other in a direction perpendicular to the extending direction of said lower arm (22).

## Patentansprüche

1. Wasserdichte Konstruktion für eine elektrische Entladungsdrahtschneidemaschine des Eintauch-Typs, die eine Bearbeitung mittels elektrischer Entladung zwischen einer Drahtelektrode (25), welche zwischen einem oberen Arm (21) und einem unteren Arm (22) gespannt ist, und einem Werkstück, das in ein Arbeitsfluid eingetaucht ist, durchführt, mit
einem Arbeitsfluid-Tank (23), der in einer Ebene in bezug auf den unteren Arm (22) bewegbar angeordnet ist, zum Bevorraten des Arbeitsfluids, wobei sich der untere Arm (22) durch eine Wandung (24) des Arbeitsfluid-Tanks (23) erstreckt,
einem ersten wasserdichten Mechanismus, der auf der Wandung (24) des Arbeitsfluid-Tanks (23), durch welche sich der untere Arm (22) erstreckt, zum Ermöglichen der Bewegung des unteren Arms (22) in einer Richtung senkrecht zu der Erstreckungsrichtung des unteren Arms (22) vorgesehen ist, wobei der erste wasserdichte Mechanismus ein Verschiebeteil (27) enthält, durch das sich der untere Arm (22) erstreckt und das in der Richtung senkrecht zu der Erstreckungsrichtung des unteren Arms (22) bewegbar ist, und
einem zweiten wasserdichten Mechanismus, der zwischen dem unteren Arm (22) und dem Verschiebeteil (27) des ersten wasserdichten Mechanismus zum Ermöglichen der Bewegung des unteren Arms (22) in der Erstreckungsrichtung des unteren Arms (22) vorgesehen ist,
dadurch **gekennzeichnet,** daß
der zweite wasserdichte Mechanismus eine Öldichtung (29) enthält, die an dem Verschiebeteil (27) befestigt ist und in Berührung mit der äußeren Umfangsoberfläche des untereren Arms (22) steht, um eine Dichtung zwischen dem Verschiebeteil (27) und der äußeren Umfangsoberfläche des untereren Arms (22) zu schaffen, und ein Abstandsbeibehaltungsmechanismus (30 - 32) bei einem Teil vorgesehen ist, wo der untere Arm (22) das Verschiebeteil (27) durchdringt, um stets einen konstanten Abstand zwischen der äußeren Umfangsoberfläche des unteren Arms (22) und dem Verschiebeteil (27) aufrechtzuerhalten.

2. Wasserdichte Konstruktion für eine elektrische Entladungsdrahtschneidemaschine des Eintauch-Typs nach Anspruch 1, wobei der untere Arm (22) einen kreisförmigen Querschnitt hat.

3. Wasserdichte Konstruktion für eine elektrische Entladungsdrahtschneidemaschine des Eintauch-Typs nach Anspruch 1 oder 2, wobei das Verschiebeteil (27) ein Montageteil (28) hat, durch welches sich der untere Arm (22) erstreckt, und die Öldichtung (28) an dem Verschiebeteil (27) über das Montageteil (28) angebaut ist.

4. Wasserdichte Konstruktion für eine elektrische Entladungsdrahtschneidemaschine des Eintauch-Typs nach einem der vorhergehenden Ansprüche, wobei die Öldichtung (29) einen Metallring (29a) und eine elastische Lippe (29b), die längs des Innenumfangs des Metallrings (29a) angeordnet ist, umfaßt.

5. Wasserdichte Konstruktion für eine elektrische Entladungsdrahtschneidemaschine des Eintauch-Typs nach einem der vorhergehenden Ansprüche, wobei der Abstandsbeibehaltungsmechanismus (30 - 32) einen Abstandshalter (30) umfaßt, der an dem Verschiebeteil (27) vorgesehen ist und ein Kopfende hat, das an dem unteren Arm (22) anliegt.

6. Wasserdichte Konstruktion für eine elektrische Entladungsdrahtschneidemaschine des Eintauch-Typs nach Anspruch 5, wobei das Verschiebeteil (27) ein Montageteil (28) hat, durch das sich der untere Arm (22) erstreckt, und ein Paar von Abstandshaltern (30) sich in einer Richtung senkrecht zu der Erstreckungsrichtung des unteren Arms (22) einander gegenüberstehend eingebaut sind.

## Revendications

1. Structure étanche à l'eau pour une machine d'étincelage de découpe par fil du type à immersion, qui réalise un usinage par étincelage entre une électrode (25) en forme de fil étirée entre un bras supérieur (21) et un bras inférieur (22) et une pièce à usiner plongée dans un fluide de travail comprenant:
une cuve de fluide de travail (23) disposée en mobilité dans un plan par rapport audit bras inférieur (22), pour stocker le fluide de travail, ledit bras inférieur (22) s'étendant à travers une paroi (24) de ladite cuve de fluide de travail (23);
un premier mécanisme étanche à l'eau prévu sur la paroi (24) de ladite cuve de fluide de travail (23) à travers laquelle s'étend ledit bras inférieur (22) pour permettre le mouvement dudit bras inférieur (22) dans une direction perpendiculaire à la direction d'extension dudit bras inférieur (22), ledit premier mécanisme étanche à l'eau englobant un élément de coulissement (27) à travers lequel s'étend ledit bras inférieur (22) et qui est mobile dans la direction perpendiculaire à la direction d'extension dudit bras inférieur (22); et
un second mécanisme étanche à l'eau, prévu entre ledit bras inférieur (22) et ledit élément de coulissement (27) dudit premier mécanisme étanche à l'eau pour permettre le mouvement dudit bras inférieur (22) dans la direction d'extension dudit bras inférieur (22),
caractérisée par le fait que:
ledit second mécanisme étanche à l'eau englobe un joint étanche à l'huile (29) fixé audit élément de coulissement (27) et en contact avec la surface périphérique externe dudit bras inférieur (22) pour procurer une étanchéité entre ledit élément de coulissement (27) et la surface périphérique externe dudit bras inférieur (22), et un mécanisme (30-32) qui maintient un jeu est prévu à une portion dans laquelle ledit bras inférieur (22) pénètre dans ledit élément de coulissement (27) dans le but de toujours maintenir un jeu constant entre la surface périphérique externe dudit bras inférieur (22) et dudit élément de coulissement (27).

2. Structure étanche à l'eau pour une machine d'étincelage de découpe par fil du type à immersion selon la revendication 1, dans laquelle ledit bras inférieur (22) possède une section transversale circulaire.

3. Structure étanche à l'eau pour une machine d'étincelage de découpe par fil du type à immersion selon la revendication 1 ou 2, dans laquelle ledit élément de coulissement (27) comporte un élément de montage (28) à travers lequel s'étend ledit bras inférieur (22) et ledit joint étanche à l'huile (29) est monté sur ledit élément de coulissement (27) via ledit élément de montage (28).

4. Structure étanche à l'eau pour une machine d'étincelage de découpe par fil du type à immersion selon l'une quelconque des revendications précédentes, dans laquelle ledit joint étanche à l'huile (29) comprend un anneau métallique (29a) et une lèvre élastique (29b) arrangée le long de la périphérie interne dudit anneau métallique (29a).

5. Structure étanche à l'eau pour une machine d'étincelage de découpe par fil du type à immersion selon l'une quelconque des revendications précédentes, dans laquelle ledit mécanisme (30-32) qui maintient un jeu comprend un dispositif d'espacement (30) prévu sur ledit élément de coulissement (27) et possédant une extrémité effilée qui vient buter contre ledit bras inférieur (22).

6. Structure étanche à l'eau pour une machine d'étincelage de découpe par fil du type à immersion selon la revendication 5, dans laquelle ledit élément de coulissement (27) comporte un élément de montage (28) à travers lequel s'étend ledit bras inférieur (22) et une paire desdits éléments d'espacement (30) sont montés en opposition mutuelle dans une direction perpendiculaire à la direction d'extension dudit bras inférieur (22).
